# EUROPEAN PATENT SPECIFICATION

(11) **EP 4 571 618 B1**
(45) Date of publication and mention of the grant of the patent: **07.10.2026**
(21) Application number: 24020333.1
(22) Date of filing: 19.11.2024
(51) Int. Cl.: G06Q 20/32, G07G 1/00, G06Q 20/04, G06Q 20/20

(54) **SYSTEM AND METHOD FOR DIGITIZING DOCUMENTS OTHERWISE INTENDED FOR PAPER PRINTING**
SYSTEM UND VERFAHREN ZUR DIGITALISIERUNG VON DOKUMENTEN, DIE ANDERWEITIG FÜR DEN PAPIERDRUCK BESTIMMT SIND
SYSTEME ET PROCEDE DE NUMERISATION DE DOCUMENTS DESTINES A L'IMPRESSION DE PAPIER

(30) Priority: 12.12.2023 IT 202300026427
(43) Date of publication of application: 18.06.2025
(73) Proprietor: Nazareno Pirozzi, Nicola, 80014 Napoli (IT)
(72) Inventor: Nazareno Pirozzi, Nicola, 80014 Napoli (IT)
(74) Representative: Mayer, Patrizia

(56) References cited:
- US-A1- 2012 185 306
- US-A1- 2015 025 986
- US-A1- 2015 262 157

## Description

### Technical field of the invention

The invention herein generally relates to the technical field of the systems to produce documents intended for the printing without the aid of a paper support. More particularly, the object of the invention herein being a system and a method for digitizing documents, i.e. a system and a method configured so to allow to transform data related to the printing of documents, otherwise intended for the paper support, to provide the same documents digitally.

### Prior art

As it is known the paper documents have a considerable impact on the environment.

With a special reference, e.g. to the tax receipts, every year in Italy 2,3 million receipts is being printed, due to which 90 thousand trees are being cut down, i.e. three times the area of Central Park, and about 330 million of litres water, intended for their treatment are consumed. Furthermore, the production and sales chain of paper rolls for the printing of tax receipts impacting about 5.800.000 kg of CO₂, equal to about one hundred and sixty-one flights from Rome to Tokyo.

Tax receipts are being typically printed on thermal paper, that is composed of sheets, that are being treated with an emulsion based on heat-sensitive substances (modifying), co-reactants, pigments and colouring substances. At the time of printing the printer head is being overheated, and touching the thermal paper sheet a reaction among emulsion and co-reactants is being caused, so to generate an image.

Being treated with chemical substances, the thermal paper is not disposable like a normal paper waste, and it must be thrown in the residual waste. The residual waste especially including all those materials that, not being able to be recycled or anyway sent for recovery, remain unsorted and must be sent for disposal. As a result, the production of tax receipts, as well as other documents intended for printing on thermal paper, involving a considerable amount of not recyclable thermal paper, con a consequent huge increase of the environmental impact.

To the above-mentioned numbers related to Italy, productions and consumptions of the other countries in the world must be added and the estimations concerning production and consumptions related to other document types, like e.g. games receipts, orders for the delivery service, general commonly used documents, etc.

Such situation has led to the increasing need to switch to a digitizing view of the documents otherwise intended for the printing, so to reduce paper consumption, especially thermal paper, reducing the environmental impact.

Currently on the market a wide variety of products / services is available, that as an ultimate goal have to allow natural people and / or legal entities, both in the public and in private field, to produce a digital format for their own documents. The currently existing solutions provide document digitizing systems and dematerialization systems.

Dematerialization systems are based on a functional flow through which a document, initially a paper one, is replicated, usually by means of scanning, in a digital format document, also called IT document, mostly with a view of digital preservation of the same.

Digitizing systems are based on a functional flow by means of which a document is being directly produced in a digital format, i.e. without that an initial paper document was available. Digitizing and dematerialization systems known from the prior art present a series of advantages, among which the reduction of the documents management costs and, in case of the digitizing systems only, the reduction of the printing costs, document storage speed, simplification and speeding up of documents research and tracking and / or cancellation of costs for the delivery expenses.

However, in the case a user, whether a natural person or a legal entity, is equipped with traditional printing systems, e.g. cash registers, printers, plotters, labelling devices, and similar, the known systems do not allow to digitally produce the documents, wherein with documents all documents that may be intended for the paper printing without any distinction are meant. More particularly, the above-mentioned known systems do not allow to produce digital documents beginning with any printing format / protocol, e.g. the printing protocol PCL (*Printer Control Language*), the printing protocol IPP (*Internet Printing Protocol*) and the ESC / POS protocol of EPSON. For example, if a Point of Sale or a Point of Purchase or a cash register or a traditional printer is available, it won't be possible to directly produce an exclusively digital receipt.

US patent publication 2012/185306 A1 (CHENG FANG [US]) of 19. July 2012 discloses a system for digitizing cash register receipts.

A system for digital cache register receipts is also disclosed in US patent publication 2015/262157 A1 (CHIHARA KAZUNORI [JP]) of 17. September 2015.

### Summary of the invention

Main purpose of the invention herein is therefore to make a digitizing method and system available for documents that otherwise are intended for the paper printing, able to overcome the above-mentioned drawback with reference to the known, in short above-described, digitizing and dematerialization system types.

More particularly, main purpose of the invention herein is to make a system and a method for the digitizing of documents otherwise intended for the paper printing available, configured so to cooperate with or replace any paper printing device.

Another purpose of the invention herein is to make a system for digitizing documents otherwise intended for the paper printing available so that they are cost-effective and therefore accessible for natural people and / or legal, public or private entities, also with a reduced economic power.

Another purpose of the invention herein is to make a system and a method for the digitizing of documents otherwise intended for the printing available, such to be easy and quick to use. These and other purposes, that will be more evident in the following description herein, are being achieved by a system, a device and a method for digitizing documents otherwise intended for the paper printing according to the independent claims 1, 7 and 11. Preferred characteristics of the system, device and method of digitizing documents otherwise intended for the paper printing are being shown in the dependent claims. The invention is therefore related to, according its first aspect, a system for the digitizing of documents otherwise intended for the paper printing including at least a data generation and transmission device related to a document intended for the paper printing and a remote server. The system being characterised in that it includes a documents digitizing device, being in communication at least with a data generation and transmission device and with the remote server, and at least one documents receiving and displaying device, being in communication with the documents digitizing device. The documents digitizing device including an electronic control unit configured for the control of the documents digitizing device so to receive the data generated by the at least one data generation and transmission device, to transmit the received data to the remote server, to receive from the remote server a digitized document, generated by the remote server upon processing of the received data from the document digitizing device, and to share the received digitized document with the at least one documents receiving and displaying device. According to its second aspect, the invention is related to a document digitizing device for the use in an above-defined digitizing system for documents otherwise intended for the paper printing. The digitizing device including an electronic control unit configured to control the digitizing device so to receive the data generated by at least one data generation and transmission device, to transmit the received data to a remote server, to receive from the remote server a digitized document, generated by the remote serve upon processing of the received data, and to share the received digitized document with at least one documents receiving and displaying device.

According to its third aspect, the invention is related to a method for the digitizing of documents otherwise intended for the paper printing conducted using the above-defined digitizing system, the method including the steps of:
- generating data related to a document intended for the paper printing in at least one data generation and transmission device;
- transmitting the data generated by the at least one data generation and transmission device to a document digitizing device;
- transmitting the received data from the document digitizing device to a remote server;
- processing, in the remote server, the received data from the document digitizing device so to generate a digitized document;
- returning the documents digitizing device, the digitized document generated by the remote server; and
- sharing the digitized document, received by the remote server, with at least the one documents receiving and displaying device.

### Short description of the drawings

Further characteristics and advantages of the present invention will be evident from the following detailed description of its preferred embodiments, carried out in the following, for indicative and non-limiting purposes, with reference to the attached drawings. In the figures:
- Figure 1 is a schematic view, illustrating a system for digitizing documents otherwise intended for the printing according to the invention herein;
- Figure 2 is a schematic view, illustrating in detail a digitizing device being included in the system for the digitizing of documents otherwise intended for the printing according to the invention herein;
- Figure 3 is a block diagram illustrating the steps of the method for digitizing documents otherwise intended for the paper printing according to the invention herein.

### Detailed description of the invention

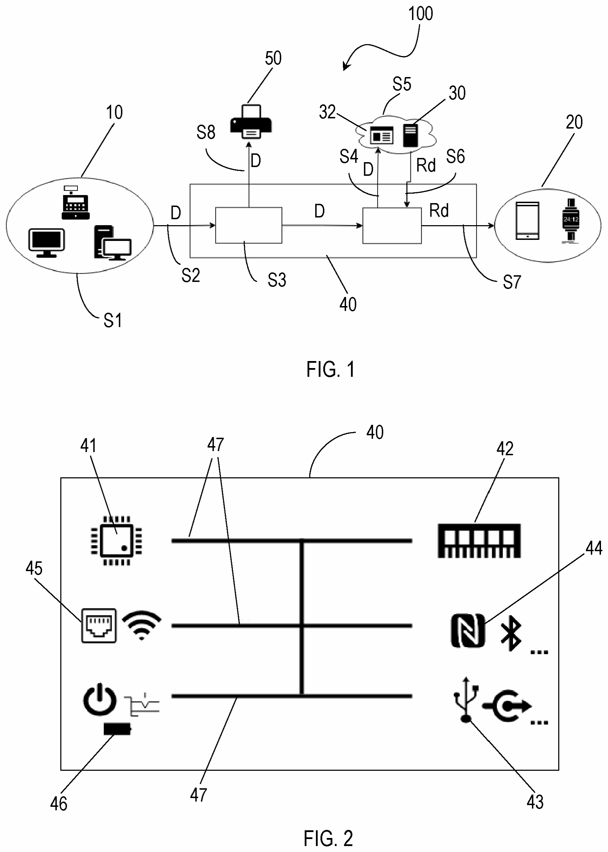

Referring to Figure 1, a system for the digitizing of documents otherwise intended for the paper printing according to a preferred embodiment of the invention herein is illustrated.

The system, referred to in general with the sign number 100, including one or more data generation and transmission devices 10 related to a document intended to the paper printing (Figure 1 only one data generation and transmission device 10 is shown), one or more data receiving devices 20, just one being shown in Figure 1, and a remote server 30. Preferably, the remote server 30 is a back-end system hosted on cloud infrastructure.

The data generation and transmission device 10 being any device configured to output data for a printing device of paper documents. As an example, the data generation and transmission device 10 being a cash register, a Point of Sale or any other known device being suitable for the purpose.

The documents receiving and displaying device 20 being any device equipped with a sensor classified in the wireless short-range communication technologies (*Short Range Wireless Communication Technology*), of connectivity for browsing the WAN network and one documents displaying system. As an example, the documents receiving and displaying device 20 is a smartphone connected to the network and equipped with an NFC antenna (*Near Field Communication*).

Preferably, on the documents receiving and displaying device 20 a B2B (Business-to-Business) application or software may be installed.

The B2B application or software allowing the legal person to display general reports on output documents (e.g. in case of tax receipts, the data concerning the sales and receipts), to manage the output documentation towards consumers indicating contingent preferred documents and sending some historicized documents again for a further sharing with the recipient of the same, if necessary.

As an alternative or additionally to the B2B application or software, on the data receiving and displaying device 20 a B2C application or software may be installed.

The B2C application or software allowing the user to collect their own documents managing the history with both a preferred section for the documents intended for specific maintaining policies and a section dedicated to reports on categorized expenses with an A.I. system. Furthermore, the B2C application or software allowing the user to share the documents with their own contacts.

The system 100 furthermore including a documents digitizing device 40 being in communication with the data generation and transmission device 10, the receiving and displaying device 20 and the remote server 30.

Preferably, the system 100 including a paper-documents printing device 50, e.g. a laser printer, a thermal printer and similar, in communication with the documents digitizing device 40, preferably by means of a peripheral standard connection, e.g. a USB port.

As shown in detail in Figure 2, the digitizing device 40 including an electronic control unit or CPU (*Central Processing Unit*) 41, e.g. a 64-bit quad-core Cortex-A53 ARM processor with 1 GHz clock speed and a memory unit 42, preferably a synchronous dynamic random-access memory or SDRAM (*Synchronous Dynamic Random Access Memory*), e.g. a 512 MB LPDDR2 SDRAM.

The digitizing device 40 furthermore including an input device 43 for the receiving of the data sent by the data generation and transmission device 10, in turn equipped with an output device (not shown in Figure 1), e.g. an USB connector.

As an example, the data generation and transmission device 10 being a Point of Sale or a cash register, sending tax receipts to print, and the input device 43 being a type A / type B USB connector for the direct connection to the Point of Sale or the cash register.

The documents digitizing device 40 furthermore including a short-range communication unit 44 or SR (*Short Range Technology*), preferably an NFC module (*Near Field Communication*) with an operation distance of about 4 cm, and one or more network cards 45, e.g. 4 GHz IEEE 802.11b/g/n wireless LAN.

The short-range communication unit 44 or SR may be put in a reading mode for the configuration of the documents digitizing device 40, especially, for the sending of network connection parameters. Alternatively, the network configuration of the documents digitizing device 40 may be carried out by means of WPS (*Wi-Fi Protected Setup*).

The documents digitizing device 40 furthermore including a power unit 46, e.g. an integrated battery or a 5V - 2,5 A external power supply.

The CPU 41 of the documents digitizing device 40 being connected to the memory unit 42, the input device 43, the short-range communication unit 44, the network cards 45, and the power unit 46, by means of a data bus 47. Particularly, and as it will be evident in the following of the description herein, the CPU 41 is being configured so to control the documents digitizing device 40 whereby it receives data D generated by the data generation and transmission device 10, sends the data D received from the remote server 30, receives from the remote server 30 a digitized document Rd, generated by the remote server 30 upon processing of the received data D, and shares the digitized document Rd received with the documents receiving and displaying device 20.

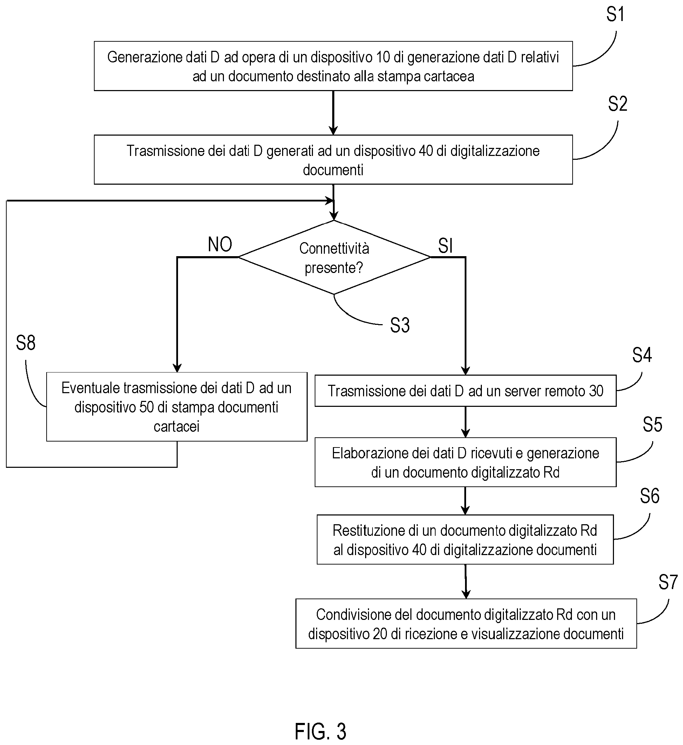

With reference to figure 1-3, now a method to digitize documents otherwise intended for the paper printing conducted using the above-described digitizing system and shown in Figure 1 is being described.

The digitizing method is being described with reference to a system including a Point of Sale, generating tax receipts, but it is intended that the following would be applicable to any system implying the use of paper material, for example: a system for the output of game receipts, existing inside betting shops, e.g. sports betting, extraction systems, and similar, wherein game receipts may be digitized so to be easily shared on final users' mobile devices, avoiding risks caused by a loss; a system, existing inside a post office, to issue receipts for over-the-counter operations; a delivery system for the issue of an order, that can be digitized unifying in an unique functional flow both the shopkeeper's tax receipt and the order placed by a customer; and a system, existing inside high-traffic commercial activities, wherein the use of row-priority management systems being necessary, if so the system of the invention herein allowing the issuing of the receipts showing the positioning related to the row priority.

The method starting with step S1, wherein the data generation and transmission device 10, in this case a Point of Sale, generates data D relative to a document intended for the paper printing, specifically data relative to a tax receipt.

Upon step S1, a step S2 following, wherein the data generation and transmission device 10 sends the data D generated to the document digitizing device 40.

Upon step S2, a preliminary step S3 following, wherein the digitizing device 40 controlled by its CPU 41 verifies the presence of connectivity with the remote server 30.

If connectivity is present (step S3, SI), the method will proceed to step S4, wherein the CPU 41 controls the digitizing device 40 so to send the data D, arriving from the Point of Sale 10, to the remote server 30, preferably constituted by a web application 32 running in the remote server 30. As an example, the web application 32 is a Java application edged by a web proxy.

Preferably the data are being sent to the remote server 30 by means of an URL address (*Uniform Resource Locator*), i.e. an alphanumeric string, composed of a changeable number of characters, identifying in a certain and unambiguous manner a resource inside an Internet network. More preferably, the data are being sent to the remote server 30 by means of an URL address with an authenticated session, e.g. using a POST request method with the HTTPS protocol.

Upon step S4, step S5 following, wherein the web application 32 processing the data D received and generating a digitized document, specifically a digitized receipt Rd, and a step S6, wherein the remote server 30 returns, with the URL address, to the documents digitizing device 40, the digitized document Rd. Upon step S6, step S7 following, wherein the documents digitizing device 40 shares the digitized receipt Rd, arriving from the remote server 30, with the documents receiving and displaying device 20. For this purpose, the URL address of the digitized receipt Rd is being uploaded to the short-range communication unit 44 or SR of the documents digitizing device 40. As an example, the device 20 is a smartphone and the URL address is being sent to the smartphone by means of NFC. Without connectivity between the documents digitizing device 40 and the remote server 30 (step S3, NO), i.e. in the case the documents digitizing device 40 is not able to surf the Internet, the method preferably goes on to step S8, wherein the documents digitizing device 40 sends data D, arriving from the Point of Sale 10, to the paper-documents printing device 50, e.g. a thermal printer, printing a paper copy of the tax receipt being immediately delivered to a customer.

Once the connectivity between the documents digitizing device 40 and the remote server 30 is being restored, step S4 through S7 of the method for the receipt digitizing are being carried out, so to allow the preservation of the digital format, e.g. for warranty storage purposes.

From the above description the characteristics of the digitizing system of documents otherwise intended for the paper printing are evident, subject matter of the invention herein, as well as the related advantages are evident.

Particularly, the system according to the invention allowing to considerably reduce the non-recyclable material needed for printing, e.g. thermal paper usable for the tax receipts printing, because the paper printing is being limited to a backup system, coming into operation only in cases of critical issues, i.e. in the absence of connectivity between the documents digitizing device 40 and the remote server 30.

Furthermore, the replacement of the currently used system to originally digitize the printing document is not necessary, because the digitizing occurring by means of a flow started by the digitizing device, that may be therefore put alongside the system itself.

Furthermore, the digitizing system according to the invention is suitable to substitute and / or being put alongside any printing device on paper material. In such a case it is possible, but not necessary, to use the operating flow part provided for the paper printing in absence of connectivity with the remote server. Indeed, in case of absence of connectivity, if requested, the digitized document will be sent to a consumer via e-mail or mobile phone, from the B2B application.

Furthermore, the paper printing of the document is not necessary to proceed, in a second step, to the dematerialization by means of scanning or image capture.

Again, the digitizing device according to the invention herein providing low costs and therefore being also accessible to natural people and / or legal, public and private entities, with a reduced economic power. As a result, the invention herein advantageously allows to speed up the digitizing process on a large scale.

Finally, it is not necessary to provide personal data, e.g. e-mail or phone number, to receive the receipt or the digital document, and if a receipt or a general document for a specific time frame is needed, the loss risk compared to a paper copy of the document itself will be eliminated. Furthermore, and specifically referring to the printing on thermal paper, the risk of illegibility of the paper document is being eliminated, e.g. a tax receipt that serves as a warranty related to the purchase of any device. Such illegibility is due, for example to wear over time and / or exposure of the paper document to light for a long period of time.

It is finally evident that contingent modifications to the described implementations may be evident to those skilled and, furthermore, the general principles disclosed in the document herein could be applied to other embodiments without, for such reasons, abandon the scope of protection of the described and shown invention.

It is therefore understood that such invention is not limited, therefore it cannot be considered as such, to the sole described implementations, but the broadest and most extensive field of protection must be necessarily attributed to it, consistently with the principles and characteristics shown in this document and defined in the attached claims.

## Claims

1. A system (100) for digitizing documents otherwise intended for paper printing including at least a device (10) for the generation and transmission of data (D) related to a document intended for the paper printing, and a remote server (30);
wherein the system includes a documents digitizing device (40) being in communication with both said device (10) for the generation and transmission of data, and said remote server (30), and at least a documents reception and displaying device (20) being in communication with said documents digitizing device (40), wherein said documents digitizing device (40) includes an electronic control unit (41) being configured to control the documents digitizing device (40) so that it: receives the data (D) generated by said at least one device (10) for the generation and transmission of data, transmits the received data (D) to said remote server (30), receives from said remote server (30) a digitized document (Rd), generated by the remote server(30) upon processing of the received data (D) from the documents digitizing device (40), and shares said received digitized document (Rd) with said at least one documents reception and displaying device (20);
wherein said data (D) received by said documents digitizing device (40) and said digitized document are, respectively, directly transmitted by said documents digitizing device (40) to said remote server (30) and directly returned by said remote server (30) to said documents digitizing device (40) through a short-range communication and an URL address.

2. The system (100) according to claim 1, wherein said remote server (30) being set up by back-end system housed on a cloud infrastructure and includes a web application (32) running on remote server (30) and receives the data (D) transmitted to the remote server (30) by the data digitizing device (40).

3. The system (100) according to claims 1 or 2, furthermore including at least a device (50) for the paper document printing being in communication with said documents digitizing device (40).

4. The system (100) according to any one of claims 1 to 3, wherein at least one documents reception and displaying device (20) includes a sensor configured for the wireless short-range communication with said documents digitizing device (40) and a system for displaying digitized documents received from said documents digitizing device (40).

5. The system (100) according to any one of the previous claims, wherein in said at least one documents reception and digitizing device (20) an application or a software B2B and/or an application or a software B2C is installed.

6. The system (100) according to any one of the previous claims, wherein said at least one device (10) for the generation and transmission of the data is a cash register or Point of Sale being able to generate data (D) related to a receipt for fiscal purposes.

7. A documents digitizing device (40) for the use in a system(100) for the digitization of documents otherwise intended for the paper printing according to any one of the previous claims, the device including an electronic control unit (41) configured to control the documents digitizing device (40) so that it: receives data (D) generated by at least one device (10) for the generation and transmission of data, transmits the received data (D) to a remote server (30), receives from the remote server (30) a digitized document (Rd), generated by the remote server (30) upon processing of the data received from the documents digitizing device (40), and shares the received digitized document (Rd) with at least one documents reception and displaying device (20); wherein said data (D) received by said documents digitizing device (40) and said digitized document are, respectively, directly transmitted by said documents digitizing device (40) to said remote server (30) and directly returned by said remote server (30) to said documents digitizing device (40) through a short-range communication and an URL address.

8. The device (40) according to claim 7, including an input peripheral device (43) for the reception of the data (D) transmitted by the at least one device (10) for the generation and transmission of data.

9. The device (40) according to claims 7 or 8, furthermore including one wireless short-range communication unit (44) for the sharing of the digitized document (Rd) with said at least one data reception and displaying device (20).

10. The device (40) according to any one of the claims 7 to 9, furthermore including a power unit (46).

11. A method for the digitization of documents otherwise intended for the paper printing carried out using the digitizing system (100) according to any one of the claims 1 to 6, the method including the steps of:
- generating (S1) data (D) related to a document intended for the paper printing in a device (10) for the generation and transmission of data;
- transmitting (S2) said data (D) generated by said device (10) for the generation and transmission of data to a documents digitizing device (40);
- transmitting (S4) said data (D) received from said documents digitizing device (40) to a remote server (30);
- processing (S5) in the remote server (30) the data (D) received by the documents digitizing device (40) so to generate a digitized document (Rd);
- returning (S6) the digitized document (Rd) from said remote server (30) to said documents digitizing device (40); and
- sharing (S7) said received digitized document (Rd) with a documents reception and displaying device (20);
wherein said data (D) received by said documents digitizing device (40) and said digitized document are, respectively, directly transmitted by said documents digitizing device (40) to said remote server (30) and directly returned by said remote server (30) to said documents digitizing device (40) through a short-range communication and an URL address.

12. The method according to claim 11, furthermore including, downstream of step (S2) of transmitting said data (D) generated by said device (10) for the generation and
transmission of data to a documents digitizing device (40), a test step (S3) for the connection presence between said documents digitizing device (40) and said remote server (30) and, in case of absence of connection, a contingent transmission step (S8) of said data (D), generated by said device (10) for the generation and transmission of data, from said document digitizing device (40) to a device (50) for the paper documents printing.

13. The method according to claim 11 or 12, wherein said sharing step (S6) of said digitized document (Rd) received with said at least one documents reception and displaying device (20) includes a step of directly transmitting said URL address of the digitized document (Rd) to said at least one documents reception and displaying device (20) through a short-range communication.

## Patentansprüche

1. System (100) zur Digitalisierung von Dokumenten, die ansonsten für den Papierdruck bestimmt sind, umfassend mindestens eine Vorrichtung (10) zur Erzeugung und Übertragung von Daten (D) in Bezug auf ein für den Papierdruck bestimmtes Dokument und einen Remote-Server (30);
**dadurch gekennzeichnet, dass** es eine Dokumentendigitalisierungsvorrichtung (40) umfasst, die sowohl mit der Vorrichtung (10) zur Erzeugung und Übertragung von Daten als auch mit dem Remote-Server (30) in Verbindung steht, und mindestens eine Dokumentenempfangs- und -anzeigevorrichtung (20), die mit der Vorrichtung (40) zur Digitalisierung von Dokumenten in Verbindung steht, wobei die Vorrichtung (40) zur Digitalisierung von Dokumenten eine elektronische Steuereinheit (41) umfasst, die so konfiguriert ist, dass sie die Vorrichtung (40) zur Digitalisierung von Dokumenten so steuert, dass diese: die von der mindestens einen Vorrichtung (10) zur Erzeugung und Übertragung von Daten erzeugten Daten (D) empfängt, die empfangenen Daten (D) an den Remote-Server (30) überträgt, von dem Remote-Server (30) ein digitalisiertes Dokument (Rd) empfängt, das vom Remote-Server (30) bei der Verarbeitung der von der Vorrichtung (40) zur Digitalisierung von Dokumenten empfangenen Daten (D) erzeugt wurde, und das empfangene digitalisierte Dokument (Rd) an die mindestens eine Dokumentenempfangs- und -anzeigevorrichtung (20) weitergibt;
wobei die von der Vorrichtung (40) zur Digitalisierung von Dokumenten empfangenen Daten (D) und die digitalisierten Dokumente jeweils direkt von der Vorrichtung (40) zur Digitalisierung von Dokumenten an den Fernserver (30) übertragen und vom Fernserver (30) über eine Kurzstreckenkommunikation und eine URL-Adresse direkt an die Vorrichtung (40) zur Digitalisierung von Dokumenten zurückgesendet werden.

2. System (100) nach Anspruch 1, wobei der Fernserver (30) durch ein Backend-System eingerichtet ist, das auf einer Cloud-Infrastruktur untergebracht ist, und eine Webanwendung (32) umfasst, die auf dem Fernserver (30) ausgeführt wird und die Daten (D) empfängt, die von der Vorrichtung (40) zur Digitalisierung von Dokumenten an den Fernserver (30) übertragen werden.

3. System (100) nach Anspruch 1 oder 2, das ferner mindestens eine Vorrichtung (50) zum Drucken von Papierdokumenten umfasst, die mit der Vorrichtung (40) zur Digitalisierung von Dokumenten in Verbindung steht.

4. System (100) nach einem der Ansprüche 1 bis 3, wobei mindestens eine Vorrichtung (20) zum Empfangen und Anzeigen von Dokumenten einen Sensor, der für die drahtlose Nahbereichskommunikation mit der Vorrichtung (40) zur Digitalisierung von Dokumenten ausgelegt ist, und ein System zum Anzeigen von digitalisierten Dokumenten umfasst, die von der Vorrichtung (40) zur Digitalisierung von Dokumenten empfangen wurden.

5. Das System (100) nach einem der vorhergehenden Ansprüche, wobei in der mindestens eine Vorrichtung (20) zum Empfang und zur Digitalisierung von Dokumenten eine B2B-Anwendung oder -Software und/oder eine B2C-Anwendung oder -Software B2C eingerichtet ist.

6. Das System (100) nach einem der vorstehenden Ansprüche, wobei die mindestens eine Vorrichtung (10) zur Erzeugung und Übertragung der Daten eine Registrierkasse oder ein Point-of-Sale-System ist, das Daten (D) im Zusammenhang mit einem steuerlich relevanten Beleg erzeugen kann.

7. Eine Vorrichtung (40) zur Digitalisierung von Dokumenten zur Verwendung in einem System (100) zur Digitalisierung von Dokumenten, die ansonsten für den Papierdruck bestimmt sind, gemäß einem der vorhergehenden Ansprüche, die Vorrichtung eine elektronische Steuereinheit (41) umfassend, die so konfiguriert ist, dass sie die Vorrichtung (40) zur Digitalisierung von Dokumenten so zu steuern, dass diese: Daten (D) empfängt, die von mindestens einer Vorrichtung (10) zur Erzeugung und Übertragung von Daten erzeugt wurden, die empfangenen Daten (D) an einen Remote-Server (30) überträgt, vom Remote-Server (30) ein digitalisiertes Dokument (Rd) empfängt, das vom Remote-Server (30) nach Verarbeitung der von der Vorrichtung (40) zur Digitalisierung von Dokumenten empfangenen Daten, und das empfangene digitalisierte Dokument (Rd) an mindestens eine Dokumentenempfangs- und - anzeigevorrichtung (20) weitergibt;
wobei die von der Vorrichtung (40) zur Digitalisierung von Dokumenten empfangenen Daten (D) und das digitalisierte Dokument jeweils direkt von der Vorrichtung (40) zur Digitalisierung von Dokumenten an den Remote-Server (30) übertragen und vom Remote-Server (30) direkt an die Vorrichtung (40) zur Digitalisierung von Dokumenten über eine Nahbereichskommunikation und eine URL-Adresse zurückgesendet werden.

8. Vorrichtung (40) nach Anspruch 7, die ein peripherisches Eingabegerät (43) zum Empfang der von der mindestens eine Vorrichtung (10) zur Erzeugung und Übertragung von Daten übertragenen Daten (D) umfasst.

9. Vorrichtung (40) nach Anspruch 7 oder 8, die ferner eine drahtlose Nahbereichskommunikationseinheit (44) zur Freigabe des digitalisierten Dokuments (Rd) mit dem mindestens einen Datenempfangs- und Anzeigevorrichtung (20) umfasst.

10. Vorrichtung (40) nach einem der Ansprüche 7 bis 9, die ferner eine Stromversorgungseinheit (46) umfasst.

11. Verfahren zur Digitalisierung von Dokumenten, die ansonsten für den Papierdruck bestimmt sind, durchgeführt unter Verwendung des Systems (100) zur Digitalisierung nach einem der Ansprüche 1 bis 6, wobei das Verfahren die folgenden Schritte umfasst:
- Erzeugen (S1) von Daten (D) in Bezug auf ein für den Papierdruck bestimmtes Dokument in einer Vorrichtung (10) zur Erzeugung und Übertragung von Daten;
- Übertragen (S2) der von der Vorrichtung (10) zur Erzeugung und Übertragung von Daten erzeugten Daten (D) an eine Vorrichtung (40) zur Digitalisierung von Dokumenten;
- Übertragen (S4) der von der Vorrichtung (40) zur Digitalisierung von Dokumenten empfangenen Daten (D) an einen Remote-Server (30);
- Verarbeiten (S5) der von der Vorrichtung (40) zur Digitalisierung von Dokumenten empfangenen Daten (D) auf dem Remote-Server (30), um ein digitalisiertes Dokument (Rd) zu erzeugen;
- Zurücksenden (S6) des digitalisierten Dokuments (Rd) von dem Remote-Server (30) an die Vorrichtung (40) zur Digitalisierung von Dokumenten; und
- Freigabe (S7) des empfangenen digitalisierten Dokuments (Rd) an eine Dokumentenempfangs- und - anzeigevorrichtung (20);
wobei die von der Vorrichtung (40) zur Digitalisierung von Dokumenten empfangenen Daten (D) und die digitalisierten Daten jeweils direkt von der Vorrichtung (40) zur Digitalisierung von Dokumenten an den Remote-Server (30) übertragen und vom Remote-Server (30) über eine Nahbereichskommunikation und eine URL-Adresse direkt an die Vorrichtung (40) zur Digitalisierung von Dokumenten zurückgesendet werden.

12. Verfahren nach Anspruch 11, das ferner im Anschluss an den Schritt (S2) der Übertragung der von der Vorrichtung (10) zur Erzeugung und Übertragung von Daten erzeugten Daten (D) an eine Vorrichtung (40) zur Digitalisierung von Dokumenten einen Prüfschritt (S3) zum Feststellen des Vorhandenseins einer Verbindung zwischen der Vorrichtung (40) zur Digitalisierung von Dokumenten und dem Remote-Server (30) und, falls keine Verbindung besteht, einen bedingten Übertragungsschritt (S8) der von der Vorrichtung (10) zur Erzeugung und Übertragung von Daten erzeugten Daten (D) von der Vorrichtung (40) zur Digitalisierung von Dokumenten an eine Vorrichtung (50) zum Drucken von Papierdokumenten.

13. Verfahren nach Anspruch 11 oder 12, wobei der Schritt (S6) der Freigabe des mit der mindestens einen Dokumentenempfangs- und -anzeigevorrichtung (20) empfangenen digitalisierten Dokuments (Rd) einen Schritt umfasst, bei dem die URL-Adresse des digitalisierten Dokuments (Rd) über eine Nahbereichskommunikation direkt an die mindestens eine Dokumentenempfangs- und -anzeigevorrichtung (20) übertragen wird

## Revendications

1. Système (100) destiné à la numérisation de documents initialement destinés à l'impression sur papier, comprenant au moins un dispositif (10) destiné à la génération et à la transmission de données (D) relatives à un document destiné à l'impression sur papier, et un serveur distant (30);
**caractérisé en ce qu'il** comprend un dispositif de numérisation de documents (40) en communication à la fois avec ledit dispositif (10) de génération et de transmission de données, et avec ledit serveur distant (30), et au moins un dispositif de réception et d'affichage de documents (20) en communication avec ledit dispositif de numérisation de documents (40), dans lequel ledit dispositif de numérisation de documents (40) comprend une unité de commande électronique (41) configurée pour commander le dispositif de numérisation de documents (40) de manière à ce qu'il : reçoive les données (D) générées par ledit au moins un dispositif (10) de génération et de transmission de données, transmette les données reçues (D) audit serveur distant (30), reçoive dudit serveur distant (30) un document numérisé (Rd), généré par le serveur distant (30) à la suite du traitement des données reçues (D) provenant du dispositif de numérisation de documents (40), et partage ledit document numérisé (Rd) reçu avec ledit au moins un dispositif de réception et d'affichage de documents (20) ;
dans lequel lesdites données (D) reçues par ledit dispositif de numérisation de documents (40) et lesdites données numérisées sont, respectivement, transmises directement par ledit dispositif de numérisation de documents (40) audit serveur distant (30) et renvoyées directement par ledit serveur distant (30) audit dispositif de numérisation de documents (40) par le biais d'une communication à courte portée et d'une adresse URL.

2. Système (100) selon la revendication 1, dans lequel ledit serveur distant (30) est mis en place par un système back-end hébergé sur une infrastructure cloud et comprend une application web (32) s'exécutant sur le serveur distant (30) et recevant les données (D) transmises au serveur distant (30) par le dispositif de numérisation de données (40).

3. Système (100) selon l'une des revendications 1 ou 2, comprenant en outre au moins un dispositif (50) d'impression de documents papier en communication avec ledit dispositif de numérisation de documents (40).

4. Système (100) selon l'une des revendications 1 à 3, dans lequel au moins un dispositif de réception et d'affichage de documents (20) comprend un capteur configuré pour la communication sans fil à courte portée avec ledit dispositif de numérisation de documents (40) et un système permettant d'afficher les documents numérisés reçus dudit dispositif de numérisation de documents (40).

5. Système (100) selon l'une des revendications précédentes, dans lequel, dans ledit au moins un dispositif de réception et de numérisation de documents (20), est installée une application ou un logiciel B2B et/ou une application ou un logiciel B2C.

6. Système (100) selon l'une des revendications précédentes, dans lequel ledit au moins un dispositif (10) destiné à la génération et à la transmission des données est une caisse enregistreuse ou un point de vente capable de générer des données (D) relatives à un ticket de caisse à des fins fiscales.

7. Dispositif de numérisation de documents (40) destiné à être utilisé dans un système (100) de numérisation de documents normalement destinés à l'impression sur papier, selon l'une quelconque des revendications précédentes, le dispositif comprenant une unité de commande électronique (41) configurée pour commander le dispositif de numérisation de documents (40) de manière à ce qu'il: reçoive des données (D) générées par au moins un dispositif (10) de génération et de transmission de données, transmette les données reçues (D) à un serveur distant (30), reçoive du serveur distant (30) un document numérisé (Rd), généré par le serveur distant (30) à l'issue du traitement des données reçues du dispositif de numérisation de documents (40), et partage le document numérisé (Rd) reçu avec au moins un dispositif de réception et d'affichage de documents (20) ;
dans lequel lesdites données (D) reçues par ledit dispositif de numérisation de documents (40) et ledit document numérisé sont, respectivement, directement transmis par ledit dispositif de numérisation de documents (40) audit serveur distant (30) et directement renvoyés par ledit serveur distant (30) audit dispositif de numérisation de documents (40) par le biais d'une communication à courte portée et d'une adresse URL.

8. Dispositif (40) selon la revendication 7, comprenant un périphérique d'entrée (43) destiné à recevoir les données (D) transmises par le au moins un dispositif (10) de génération et de transmission de données.

9. Dispositif (40) selon l'une des revendications 7 ou 8, comprenant en outre une unité de communication sans fil à courte portée (44) destinée au partage du document numérisé (Rd) avec ledit au moins un dispositif de réception et d'affichage de données (20).

10. Dispositif (40) selon l'une des revendications 7 à 9, comprenant en outre une unité d'alimentation (46).

11. Procédé de numérisation de documents initialement destinés à être imprimés sur papier, mis en œuvre à l'aide du système de numérisation (100) selon l'une des revendications 1 à 6, le procédé comprenant les étapes suivantes:
- générer (S1) des données (D) relatives à un document destiné à être imprimé sur papier dans un dispositif (10) de génération et de transmission de données;
- transmettre (S2) lesdites données (D) générées par ledit dispositif (10) de génération et de transmission de données vers un dispositif de numérisation de documents (40);
- transmettre (S4) lesdites données (D) reçues dudit dispositif de numérisation de documents (40) à un serveur distant (30);
- traiter (S5) dans le serveur distant (30) les données (D) reçues par le dispositif de numérisation de documents (40) de manière à générer un document numérisé (Rd);
- renvoyer (S6) le document numérisé (Rd) depuis ledit serveur distant (30) vers ledit dispositif de numérisation de documents (40); et
- partager (S7) ledit document numérisé reçu (Rd) avec un dispositif de réception et d'affichage de documents (20); dans lequel lesdites données (D) reçues par ledit dispositif de numérisation de documents (40) et ledit dispositif numérisé sont, respectivement, transmises directement par ledit dispositif de numérisation de documents (40) audit serveur distant (30) et renvoyées directement par ledit serveur distant (30) audit dispositif de numérisation de documents (40) par le biais d'une communication à courte portée et d'une adresse URL.

12. Procédé selon la revendication 11, comprenant en outre, en aval de l'étape (S2) consistant à transmettre lesdites données (D) générées par ledit dispositif (10) de génération et
de transmission de données vers un dispositif de numérisation de documents (40), une étape de test (S3) visant à vérifier la présence d'une connexion entre ledit dispositif de numérisation de documents (40) et ledit serveur distant (30) et, en cas d'absence de connexion, une étape de transmission contingente (S8) desdites données (D), générées par ledit dispositif (10) destiné à la génération et à la transmission de données, depuis ledit dispositif de numérisation de documents (40) vers un dispositif (50) destiné à l'impression de documents papier.

13. Procédé selon la revendication 11 ou 12, dans lequel ladite étape de partage (S6) dudit document numérisé (Rd) reçu par ledit au moins un dispositif de réception et d'affichage de documents (20) comprend une étape consistant à transmettre directement ladite adresse URL du document numérisé (Rd) audit au moins un dispositif de réception et d'affichage de documents (20) par le biais d'une communication à courte portée.
La presente traduzione è conforme al testo nella stesura accettata dall'Ufficio Brevetti Europeo per il rilascio del brevetto europeo.
